# NEUE EUROPÄISCHE PATENTSCHRIFT

(11) **EP 1 536 967 B2**
(45) Veröffentlichungstag und Bekanntmachung des Hinweises auf die Entscheidung über den Einspruch: **10.08.2016**
(45) Hinweis auf die Patenterteilung: 21.07.2010
(21) Anmeldenummer: 03706260.1
(22) Anmeldetag: 30.01.2003
(51) Int. Cl.: B60K 6/48, B60W 20/00, B60W 10/06, B60W 10/08

(54) **KRAFTFAHRZEUG MIT EINEM HYBRIDANTRIEB SOWIE VERFAHREN ZUR LEERLAUFREGELUNG EINES HYBRIDANTRIEBS EINES KRAFTFAHRZEUGS**
MOTOR VEHICLE COMPRISING A HYBRID DRIVE AND METHOD FOR CONTROLLING THE IDLE SPEED OF A HYBRID DRIVE OF A MOTOR VEHICLE
VEHICULE AUTOMOBILE COMPRENANT UN ENTRAINEMENT HYBRIDE, ET PROCEDE POUR REGLER LE POINT MORT D'UN ENTRAINEMENT HYBRIDE DE VEHICULE AUTOMOBILE

(30) Priorität: 05.09.2002 DE 10241018
(43) Veröffentlichungstag der Anmeldung: 08.06.2005
(73) Patentinhaber: ROBERT BOSCH GMBH, 70442 Stuttgart (DE)
(72) Erfinder: WEBER, Nicole, 73084 Salach (DE); HOETZER, Dieter, 71701 Schwieberdingen (DE); TUMBACK, Stefan, 70469 Stuttgart (DE)
(86) Internationale Anmeldenummer: PCT/DE2003/000244
(87) Internationale Veröffentlichungsnummer: WO 2004/026606

(56) Entgegenhaltungen:
- EP-A- 1 221 394
- WO-A-99/21261
- DE-A- 3 107 529
- DE-A- 10 047 969
- DE-A- 19 704 153
- DE-A1- 4 325 505
- DE-A1- 4 405 340
- DE-A1- 19 624 343
- DE-C2- 4 305 573
- DE-C2- 4 406 193
- GB-A- 2 371 632
- R. VAN BASSHUYSEN ET AL.: 'Handbuch Verbrennungsmotor', Bd. 2, 2002, VIEWEG & SOHN VERLAGSGESELLSCHAFT MBH, WIESBADEN Seiten 556, 581 - 851

## Beschreibung

Die Erfindung betrifft ein Kraftfahrzeug mit einem Hybridantrieb mit den im Patentanspruch 1 genannten Merkmalen, sowie ein Verfahren zur Leerlaufregelung eines Hybridantriebs eines Kraftfahrzeugs mit den im Patentanspruch 7 genannten Merkmalen.

### Stand der Technik

Als Kraftfahrzeuge mit Hybridantrieb werden Kraftfahrzeuge bezeichnet, die neben einem konventionellen Verbrennungsmotor eine oder ggf. auch mehrere angegliederte Elektromaschinen aufweisen, die mit einer Triebwelle im Antriebsstrang des Kraftfahrzeugs kuppelbar oder fest verbunden (ISG) sind und sowohl im Generatorbetrieb als auch im Motorbetrieb arbeiten können. Während sie im Generatorbetrieb vom Verbrennungsmotor angetrieben werden und elektrischen Strom zur Versorgung von Verbrauchern des Kraftfahrzeugs erzeugen, wird ihnen im Moführt, um diesen in Antriebsenergie für das Kraftfahrzeug oder in Startenergie für den Verbrennungsmotor umzuwandeln. Neben der Fahrzeugbatterie als Stromspeicher könnte ein Schwungrad oder ein anderer Speicher für kinetische Energie vorgesehen werden, mit dem zum Beispiel beim Bremsen freiwerdende kinetische Energie gespeichert und über die Elektromaschine an die Verbraucher des Kraftfahrzeugs oder später wieder an dessen Antriebsstrang abgegeben werden kann.

Im drehzahlgeregelten Leerlaufbetrieb des Verbrennungsmotors wird die Elektromaschine automatisch im Generatormodus betrieben.

Die für den Betrieb des Verbrennungsmotors und der Elektromaschine erforderlichen Steuerungs- und Regelungsaufgaben werden bei Kraftfahrzeugen mit Hybridantrieb im allgemeinen in der gleichen Weise wie bei herkömmlichen Kraftfahrzeugen verteilt. Dies bedeutet, dass die Regelung der Drehzahl des Verbrennungsmotors von der elektronischen Motorsteuerung übernommen wird, welche die Drehzahl misst und mit geeigneten Regelverfahren Stellgrößen wie Einspritzmenge, Zündwinkel oder Luftmenge für den Verbrennungsmotor berechnet, um so die vorgegebene Leerlaufdrehzahl einzustellen oder zu halten. Demgegenüber erfolgt die Spannungsregelung eines elektrischen Bordnetzes bzw. eine Laderegelung einer Batterie des Kraftfahrzeugs, indem mit Hilfe eines Steuergerät der Elektromaschine eine vom Bordnetz oder zur Aufladung der Batterie angeforderte Leistung von der Elektromaschine bereitgestellt wird.

Allerdings sind die zur Regelung der Drehzahl des Verbrennungsmotors in der Motorsteuerung ablaufenden Funktionen sehr aufwändig, da die Regelung jeweils nur zum Zündzeitpunkt des Verbrennungsmotors erfolgen kann, was zu einer mäßig schnellen und je nach Zylinderzahl mehr oder weniger ruhigen Leerlaufregelung führt. Zudem muss ein verhältnismäßig großer Aufwand getrieben werden, da die Regelung unter allen Betriebsbedingungen stabil und gegenüber einer Vielzahl von Störgrößen abgesichert werden muss.

Demgegenüber ist bei einer Elektromaschine die Drehzahl verhältnismäßig leicht regelbar und auch eine Drehmomentsteuerung mit geringem Aufwand und gutem Ergebnis realisierbar.

Aus der DE 195 32 163 A1 ist bereits ein Kraftfahrzeug mit einem Hybridantrieb und ein Verfahren zur Leerlaufregelung eines Hybridantriebs eines Kraftfahrzeugs der eingangs genannten Art bekannt. Das bekannte Verfahren dient zur Verringerung von Drehungleichförmigkeiten einer Welle, insbesondere der Triebwelle eines Verbrennungsmotors, wobei eine mit der Triebwelle gekoppelte oder koppelbare Elektromaschine so gesteuert wird, dass deren Drehungleichförmigkeiten verringert werden. Darüber hinaus wird in dieser Druckschrift auch angeregt, dass das für die Steuerung der Elektromaschine zuständige Steuergerät wegen seiner Schnelligkeit und Leistungsfähigkeit auch eingesetzt werden kann, um Aufgaben der Motorsteuerung zu übernehmen, darunter auch die Steuerung der Drehzahl des Verbrennungsmotors im Leerlauf, während umgekehrt die Motorsteuerung eine oder mehrere Aufgaben des Steuergeräts der Elektromaschine übernehmen kann, zum Beispiel die Steuerung des Drehmoments der Elektromaschine.

Dabei können jedoch im Hinblick auf die Leistungsanforderungen des elektrischen Bordnetzes des Kraftfahrzeugs Probleme auftreten, weil sich dieses den Erfordernissen der Leerlaufregelung unterordnen muss, wenn mit Hilfe der Elektromaschine eine vorgegebene Leerlaufdrehzahl eingestellt und gehalten werden soll. Sofern zum Beispiel unmittelbar nach dem Start des Kraftfahrzeugs, wenn sich der Verbrennungsmotor im Leerlauf befindet, ein elektrischer Verbraucher zugeschaltet wird, wie beispielsweise eine Heckscheibenheizung, und gleichzeitig eine Batterieladeregler des Kraftfahrzeugs eine Stromzufuhr zur Aufladung der Fahrzeugbatterie anfordert, dann kann die dafür erforderliche elektrische Leistung der Elektromaschine nicht sofort bereitgestellt werden, weil dies wiederum negative anfordert, dann kann die dafür erforderliche elektrische Leistung der Elektromaschine nicht sofort bereitgestellt werden, weil dies wiederum negative Auswirkungen auf die Regelung der Drehzahl des Verbrennungsmotors hätte.

Aus der DE 197 04 153 A1 ist bereits ein Kraftfahrzeug und ein Verfahren der eingangs genannten Art bekannt, bei denen im Leerlauf die Elektromaschine von einer zugehörigen Steuerung so gesteuert wird, dass sie einer Änderung der Leerlaufdrehzahl durch Aufbringen eines antreibenden oder bremsenden Drehmoments entgegenwirkt. Allerdings kann auch der Verbrennungsmotor in das Kurzzeit-Steuerverhalten mit einbezogen werden, indem auch er selbst einer Änderung seiner Leerlaufdrehzahl entgegenwirkt. In der Regel wird jedoch im Leerlauf nur die Elektromaschine gesteuert, weil aufgrund des sehr schnellen Eingriffs der Elektromaschine die Soll-Drehzahl niedrig gewählt werden kann, ohne dass eine kritische Drehzahl bei einer Lastaufschaltung unterschritten würde. Die bei einer Lastaufschaltung benötigte elektrische Energie wird einem oder mehreren Energiespeichern entnommen, was insbesondere bei einem nächtlichen Kaltstart bei tiefen Temperaturen zu einer übermäßigen Entladung der Batterie führen kann, wenn unmittelbar nach dem Start des Verbrennungsmotors im Leerlauf mehrere große Verbraucher des Bordnetzes, wie Heckscheibenheizung, Sitzheizung, Gebläse und Licht eingeschaltet und damit über die Elektromaschine eine hohe elektrische Leistung von der Batterie abgefordert wird.

Aus der WO 99/21261 A1 ist weiter eine Einrichtung zur Energieverteilung in einem Kraftfahrzeug bekannt, die sich mit der Versorgung der in einem Kraftfahrzeug vorhandenen Verbraucher befasst, jedoch keine spezielle Aussagen über die Steuerung des Verbrennungsmotors im Leerlauf trifft und auch keine im Leerlauf mit einer Treibwelle des Verbrennungsmotors gekuppelte drehzahlgeregelte Elektromaschine umfasst. Zudem stellt die WO 99/21261 darauf ab, die Bordnetzspannung in einem engen Toleranzband zu halten, und nicht darauf, die Drehzahl des Verbrennungsmotors im Leerlauf zu steuern oder zu regeln.

### Vorteile der Erfindung

Das erfindungsgemäße Kraftfahrzeug mit den im Anspruch 1 genannten Merkmalen und das erfindungsgemäße Verfahren mit den im Anspruch 7 genannten Merkmalen bietet demgegenüber den Vorteil, dass durch eine Steuerung oder Regelung des Verbrennungsmotors entsprechend den Erfordernissen des Bordnetzes dessen Leistungsanforderungen im Leerlauf ohne Rücksichtnahme auf die Drehzahlregelung sofort und im Wesentlichen vollständig erfüllt werden können. Indem man den Drehzahlregler des Verbrennungsmotors im Leerlauf durch mindestens eine drehzahlgeregelte Elektromaschine ersetzt, kann zudem die Regelgüte verbessert und der Applikationsaufwand des Leerlaufreglers deutlich gesenkt werden. Zudem lassen sich durch einen deaktivierten motorseitigen Leerlaufregler Verbrauch und Abgase erheblich reduzieren.

Als Leistungsanforderungen des Bordnetzes werden im Rahmen der vorliegenden Anmeldung die zur Aufladung einer Batterie des Kraftfahrzeuge angeforderte elektrische Leistung sowie daneben auch die gleichzeitig von elektrischen Verbrauchern des Kraftfahrzeugs im Leerlauf verbrauchte elektrische Leistung bezeichnet.

Erfindungsgemäss ist vorgesehen, dass die Leistungsabgabe des Verbrennungsmotors an die jeweilige Leistungsanforderung des Bordnetzes des Kraftfahrzeugs angepasst wird, indem in Abhängigkeit von der jeweiligen Leistungsanforderung ein Wunsch- oder Soll-Drehmoment des Verbrennungsmotors ermittelt wird, bei dem die von der Elektromaschine abgegebene elektrische Leistung ungefähr den Leistungsanforderungen des Bordnetzes entspricht.

Zur Ermittlung dieses Wunsch- oder Soll-Drehmoments des Verbrennungsmotors wird von der elektrischen Leistung ausgegangen, die von der Elektromaschine zur Erfüllung der Leistungsanforderungen des Bordnetzes bereitgestellt werden muss.

Wie bereits ausgeführt, setzt sich diese Leistung im Wesentlichen aus der zur Aufladung der Fahrzeugbatterie erforderlichen elektrischen Leistung und der von den elektrischen Verbrauchern des Kraftfahrzeugs im Leerlauf verbrauchten elektrische Leistung zusammen.

Die zur Aufladung der Batterie erforderliche elektrische Leistung kann am einfachsten durch Messung der Batteriespannung ermittelt werden, oder gemäß einer bevorzugten Ausgestaltung der Erfindung, indem zusätzlich der jeweilige Ladezustand der Batterie festgestellt und neben der Batteriespannung in die Berechnungen zur Ermittlung der zur Aufladung der Batterie erforderlichen elektrischen Leistung mit einbezogen wird.

Zur Ermittlung der von den elektrischen Verbrauchern des Kraftfahrzeugs im Leerlauf benötigten elektrischen Energie kann der Einschaltzustand sämtlicher in Frage kommender Verbraucher abgefragt und die Nennleistung der jeweils eingeschalteten Verbraucher addiert werden. Mögliche Verbraucher können zum Beispiel eine Heckscheibenheizung oder Sitzheizung des Kraftfahrzeugs oder Teile von dessen Beleuchtungsanlage sein, die häufig unmittelbar nach einem Start des Kraftfahrzug eingeschaltet werden, solange sich dieses noch im Leerlauf befindet, sowie elektrische Steuergeräte des Kraftfahrzeugs, die beim Start des Kraftfahrzeugs automatisch in Betrieb genommen werden und im Betrieb elektrische Energie benötigen.

Die aus diesen Parametern berechnete elektrische Leistung, die zur Erfüllung der Leistungsanforderungen des Bordnetzes von der Elektromaschine bereitgestellt werden muss, wird anschließend in das dafür benötigte Wunsch- oder Soll-Drehmoment des Verbrennungsmotors umgerechnet, wobei über eine Vorsteuerung als weiterer Einflussparameter vorzugsweise die augenblickliche Motortemperatur und/oder die Drehzahl des Verbrennungsmotors berücksichtigt werden. Zweckmäßig besteht die Vorsteuerung im Wesentlichen aus einem zu applizierenden Kennfeld, in das der vorgenannte weitere Einflussparameter Eingang findet. Die Vorsteuerung sorgt dafür, dass eine gemessene Leistungsabgabe der vom Verbrennungsmotor angetriebenen Elektromaschine in etwa der berechneten Leistungsanforderung entspricht.

Weil es aus Gründen der Vereinfachung bei der Ermittlung des Wunsch- oder Soll-Drehmoments nicht sinnvoll wäre, sämtliche möglichen Einflussparameter zu berücksichtigen, und weil somit mit kleineren Abweichungen zwischen der berechneten und der tatsächlichen Leistungsabgabe der Elektromaschine zu rechnen ist, sieht eine weitere bevorzugte Ausgestaltung der Erfindung vor, die tatsächliche Leistungsabgabe der Elektromaschine zu messen, eventuelle Abweichungen zwischen der gemessenen und der berechneten Leistung durch Vergleich der beiden Werte festzustellen und sie mittels eines aufgeschalteten langsamen Reglers der Motorsteuerung oder des Steuergeräts der Elektromaschine auszugleichen, indem das Wunsch- oder Soll-Drehmoment des Verbrennungsmotors entsprechend dem Ergebnis des Vergleichs angepasst wird.

Die Anpassung des Wunsch- oder Soll-Drehmoment kann bei einem Dieselmotor durch eine entsprechende Veränderung der Einspritzmenge eingestellt werden, während es bei einem Benzinmotor vorzugsweise durch eine entsprechende Veränderung der Luftmenge eingestellt wird, wahlweise jedoch auch durch Veränderung des Zündzeitpunkts eingestellt werden kann.

### Zeichnung

Die Erfindung wird nachfolgend in einem Ausführungsbeispiel anhand der zugehörigen Zeichnungen näher erläutert. Es zeigen:
Figur 1 eine schematische Darstellung eines Hyb- ridantriebs eines Kraftfahrzeugs mit ei- nem Verbrennungsmotor und einer Elektro- maschine;
Figur 2 ein Schaubild eines Signalflussdiagramms zur Leerlaufregelung des Hybridantriebs.

### Beschreibung des Ausführungsbeispiels

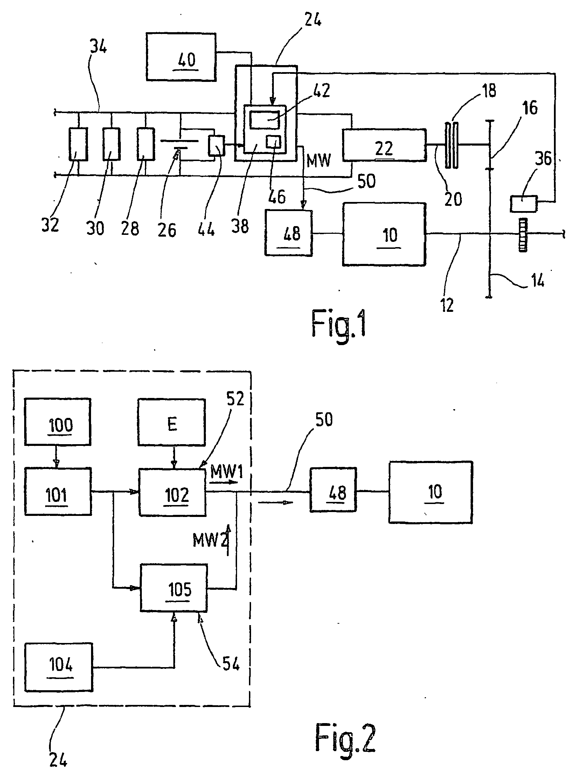

Der in Fig. 1 dargestellte Hybridantrieb eines Kraftfahrzeugs umfasst in bekannter Weise einen Verbrennungsmotor 10, dessen Kurbelwelle 12 über zwei Zahnräder 14, 16 und eine Kupplung 18 mit der Abtriebswelle 20 einer Elektromaschine 22 des Kraftfahrzeugs kuppelbar ist.

Die Elektromaschine 22 weist ein Steuergerät 24 auf und ist über das Steuergerät 24 mit einer Batterie 26 des Kraftfahrzeugs verbunden, die eine Mehrzahl von Verbrauchern 28, 30, 32 usw. in einem Bordnetz 34 des Kraftfahrzeugs mit Gleichstrom versorgt. Die Verbraucher 28, 30, 32 umfassen sämtliche mit Strom betriebenen Aggregate des Kraftfahrzeugs, wie zum Beispiel die Heckscheibenheizung, das Radio, die Glühkerze und die einzelnen Leuchten der Beleuchtungsanlage. Das Steuergerät 24 ist weiter mit einem Winkelsensor 36 zur Ermittlung der Drehzahl der Kurbelwelle 12 verbunden.

Die Elektromaschine 22 dient als Starter-Generator für den Verbrennungsmotor 10. Bei jedem Start des Kraftfahrzeugs wird sie zuerst durch Stromzufuhr von der Batterie 26 auf eine vorgegebene Drehzahl gebracht, woraufhin die Kupplung 18 geschlossen und der Verbrennungsmotor 10 von der Elektromaschine 22 momentengesteuert oder drehzahlgeregelt gestartet wird. Sobald der Verbrennungsmotor 10 eine vorgegebene Leerlaufdrehzahl erreicht hat, wird vom Steuergerät 24 anhand der Signale vom Winkelsensor 36 auf Startende erkannt. Anschließend wird der Verbrennungsmotor 10 mit Hilfe der Elektromaschine 22 und des Steuergeräts 24 drehzahlgeregelt, wobei die Elektromaschine 22 dafür sorgt, dass die vorgegebene Leerlaufdrehzahl gehalten wird. Die Elektromaschine 22 geht im drehzahlgeregelten Leerlaufbetrieb automatisch in den Generatormodus, in dem sie die Batterie 26 mit Strom versorgt.

Das Steuergerät 24 der Elektromaschine 22 ist mit einem Rechner 38 ausgestattet, dem von einem zentralen Bordcomputer 40 des Kraftfahrzeugs der Einschaltzustand der einzelnen Verbraucher 28, 30, 32 des Bordnetzes 34 übermittelt wird. Der Rechner 36 umfasst auch einen Speicher 42, in dem die Nennleistungen der einzelnen Verbraucher 28, 30, 32 gespeichert sind. Weiter ist der Rechner 38 mit einem Batterieregler 44 verbunden, der die augenblickliche Klemmenspannung und den augenblicklichen Ladezustand der Batterie 26 ermittelt und bei Bedarf für eine Aufladung der Batterie 26 sorgt, zum Beispiel wenn ein Ladezustand von 70 % unterschritten wird.

Auf der Grundlage der Signale vom Bordcomputer 40 und vom Batterieregler 44 wird vom Rechner 38 im Leerlauf der augenblickliche Leistungsbedarf für die Aufladung der Batterie 26 und der augenblickliche Leistungsbedarf der eingeschalteten Verbraucher 28, 30, 32 ermittelt, der sich durch Addition der Nennleistungen der eingeschalteten Verbraucher 28, 30, 32 ergibt. Dieser Leistungsbedarf im Leerlaufbetrieb entspricht im Wesentlichen dem Gesamtleistungsbedarf des Bordnetzes 34, der von der im Generatormodus arbeitenden Elektromaschine 22 bereitgestellt werden muss.

Das Steuergerät 26 umfasst auch ein Messgerät 46 zur Messung der Stromstärke des von der Elektromaschine 22 in das Bordnetz 34 fließenden elektrischen Stroms, aus der sich in Verbindung mit der Spannung des Bordnetzes 34 die tatsächlich von der Elektromaschine 22 an das Bordnetz 34 abgegebene Leistung berechnen lässt.

Der als Dieselmotor ausgebildete Verbrennungsmotor 10 weist eine Motorsteuerung 48 auf, die anders als bei herkömmlichen Verbrennungsmotoren nicht zur Regelung der Leerlaufdrehzahl des Verbrennungsmotors 10 dient, sondern im Leerlauf die Menge des eingespritzten Dieselkraftstoffs in Abhängigkeit von einem vom Steuergerät 24 über eine Leitung 50 an die Motorsteuerung 40 übermittelten angeforderten Wunsch- oder Soll-Drehmoment MW steuert. Wenn der Verbrennungsmotor 10 im Leerlauf über die Elektromaschine 22 drehzahlgeregelt wird, lässt sich über dieses angeforderte Wunsch- oder Soll-Drehmoment MW die Leistungsabgabe der Elektromaschine 22 steuern und an den jeweiligen Leistungsbedarf des Bordnetzes 34 anpassen.

Wie am besten in Fig. 2 dargestellt, wird das angeforderte Wunsch- oder Soll-Drehmoment MW ermittelt, indem in einem ersten Schritt 100 in der Steuerung 24 vom Rechner 38 der jeweilige Gesamtleistungsbedarf des Bordnetzes 34 ermittelt wird, wie oben beschrieben. Aus diesem Gesamtleistungsbedarf wird unter Berücksichtigung einer eventuellen Verlustleistung in einem zweiten Schritt 101 die Leistung berechnet, die zur Deckung dieses Leistungsbedarfs von der Elektromaschine 22 an das Bordnetz 34 abgegeben werden muss. Diese Leistungsanforderung wird in einem dritten Schritt 102 über eine Vorsteuerung 52 in Wunsch- oder Soll-Drehmoment MW1 umgerechnet. Die Vorsteuerung 52 besteht im Wesentlichen aus einem zu applizierenden Kennfeld, wobei als weitere Eingangsgröße E die augenblickliche Motortemperatur und ggf. die Drehzahl des Verbrennungsmotors 10 berücksichtigt wird.

Das von der Vorsteuerung 52 ausgebebene Wunsch- oder Soll-Drehmoment MW1 wird über die Leitung 50 der Motorsteuerung 48 zugeführt, woraufhin diese die Menge des eingespritzten Dieselkraftstoffs so anpasst, dass der Verbrennungsmotor 10 das Wunsch- oder Soll-Drehmoment MW1 an die Kurbelwelle 12 abgibt.

Bei diesem Wunsch- oder Soll-Drehmoment MW1 entspricht die tatsächliche Leistungsabgabe der Elektromaschine 22 an das Bordnetz 34 im Wesentlichen dem berechneten Leistungsbedarf. Um gegebenenfalls mögliche Abweichungen zu erkennen und die Leistungsabgabe der Elektromaschine 22 noch besser an den Leistungsbedarf des Bordnetzes 34 anzupassen, wird in einem vierten Schritt 104 die tatsächliche Leistungsabgabe der Elektromaschine 22 mit Hilfe des Messgeräts 46 vom Rechner 38 ermittelt und in einer Vergleichsschaltung oder mittels einer entsprechenden Software des Rechners 38 mit der im Schritt 101 berechneten Leistungsabgabe verglichen.

Im Falle einer Abweichung nach oben oder unten, wird diese Abweichung in einem fünften Schritt 105 von einem aufgeschalteten langsamen Regler 54 ausgeregelt, so dass als Ausgangsgröße vom Steuergerät 24 ein Wunsch- oder Soll-Drehmoment MW2 an die Motorsteuerung 48 ausgegeben wird, das entsprechend der Abweichung gegenüber dem Wunsch- oder Soll-Drehmoment MW1 etwas größer bzw. kleiner ist. Diese langsame Regelung im Schritt 105 reagiert mit einer Ansprechzeit von einigen Sekunden, während derer die Abweichung über die Batterie 26 gepuffert wird.

## Patentansprüche

1. Kraftfahrzeug mit einem Hybridantrieb, umfassend einen Verbrennungsmotor mit einer Motorsteuerung und mindestens eine im Leerlauf mit einer Triebwelle des Verbrennungsmotors gekuppelte drehzahlgeregelte Elektromaschine, wobei die Motorsteuerung (48) im Leerlauf den Verbrennungsmotor (10) In Abhängigkeit von Leistungsanforderungen eines Bordnetzes (34) des Kraftfahrzeugs steuert oder regelt, sowie Einrichtungen (24, 38, 40, 44) zur Ermittlung der Leistungsanforderungen des Bordnetzes (34) im Leerlauf und eine Vorsteuerung (52) zur Umrechnung der ermittelten Leistungsanforderungen des Bordnetzes (34) im Leerlauf in ein Wunsch- oder Soll-Drehmoment (MW, MW1) des Verbrennungsmotors (10), wobei die Leistungsanforderungen die zur Aufladung einer Batterie des Kraftfahrzeugs angeforderte elektrische Leistung und die gleichzeitig von elektrischen Verbrauchern des Kraftfahrzeugs im Leerlauf verbrauchte elektrische Leistung umfassen.

2. Kraftfahrzeug nach Anspruch 1, **dadurch gekennzeichnet, dass** die Einrichtungen (24, 38, 40, 44) zur Ermittlung der Leistungsanforderungen des Bordnetzes (34) im Leerlauf Einrichtungen (44) zur Messung der Klemmenspannung und/oder zur Ermittlung des Ladezustands einer Batterie (26) des Kraftfahrzeugs umfassen.

3. Kraftfahrzeug nach Anspruch 1 oder 2, **dadurch gekennzeichnet, dass** die Einrichtungen (24, 38, 40, 44) zur Ermittlung der Leistungsanforderungen des Bordnetzes (34) im Leerlauf Einrichtungen (38, 40) zur Ermittlung von eingeschalteten Verbrauchern (28, 30, 32) sowie zur Addition der Nennleistung der eingeschalteten Verbraucher (28, 30, 32) umfassen.

4. Kraftfahrzeug nach einem der Ansprüche 1 bis 3, **gekennzeichnet durch** Einrichtungen (46) zum Messen der Leistungsabgabe der Elektromaschine (22).

5. Kraftfahrzeug nach Anspruch 4, **gekennzeichnet durch** eine Einrichtung (38) zum Vergleichen einer aus den Leistungsanforderungen des Bordnetzes (34) berechneten Leistungsabgabe der Elektromaschine (22) und der gemessenen Leistungsabgabe der Elektromaschine (22).

6. Kraftfahrzeug nach Anspruch 5, **gekennzeichnet durch** einen langsamen Regler (54) zur eventuellen Anpassung des Wunsch- oder Soll-Drehmoments (MW, MW2) des Verbrennungsmotors (10) entsprechend einer Ausgangsgröße der Vergleichseinrichtung (38).

7. Verfahren zur Leerlaufregelung eines Hybridantriebs eines Kraftfahrzeugs, der einen Verbrennungsmotor und mindestens eine im Leerlauf mit einer Triebwelle des Verbrennungsmotors gekuppelte drehzahlgeregelte Elektromaschine umfasst, bei dem im Leerlauf mit Hilfe der Elektromaschine eine vorgegebene Leerlaufdrehzahl des Verbrennungsmotors eingestellt oder gehalten wird, bei dem der Verbrennungsmotor im Leerlauf in Abhängigkeit von Leistungsanforderungen eines Bordnetzes des Kraftfahrzeugs gesteuert oder geregelt wird, und bei dem eine zur Erfüllung der Leistungsanforderungen des Bordnetzes (34) erforderliche Leistungsabgabe der Elektromaschine (22) berechnet und die berechnete Leistungsabgabe über eine Vorsteuerung (52) in ein Wunsch- oder Soll-Drehmoment (MW, MW1) des Verbrennungsmotors (10) umgerechnet wird, wobei die Leistungsanforderungen die zur Aufladung einer Batterie des Kraftfahrzeugs angeforderte elektrische Leistung und die gleichzeitig von elektrischen Verbrauchern des Kraftfahrzeugs im Leerlauf verbrauchte elektrische Leistung umfassen.

8. Verfahren nach Anspruch 7, **dadurch gekennzeichnet, dass** die Leistungsabgabe des Verbrennungsmotors (10) an eine jeweilige Leistungsanforderung eines Bordnetzes (34) des Kraftfahrzeugs angepasst wird.

9. Verfahren nach Anspruch 7 oder 8, **dadurch gekennzeichnet, dass** in Abhängigkeit von der Leistungsanforderung des Bordnetzes (34) ein Soli- Drehmoment (MW, MW1) des Verbrennungsmotors (10) bestimmt und eine Einspritzmenge, eine Luftmenge und/oder ein Zündwinkel des Verbrennungsmotors (10) entsprechend dem bestimmten Soll- Drehmoment (MW, MW1) angepasst wird.

10. Verfahren nach einem der Ansprüche 7 bis 9, **dadurch gekennzeichnet, dass** die Vorsteuerung (52) im Wesentlichen aus einem zu applizierenden Kennfeld besteht, das als weitere Eingangsgröße (E) die Motortemperatur und/oder Drehzahl des Verbrennungsmotors (10) berücksichtigt.

11. Verfahren nach einem der Ansprüche 7 bis 10, **dadurch gekennzeichnet, dass** die Leistungsabgabe der Elektromaschine (22) gemessen und mit der berechneten Leistungsabgabe verglichen wird.

12. Verfahren nach Anspruch 11, **dadurch gekennzeichnet, dass** bei einer Abweichung der gemessenen Leistungsabgabe der Elektromaschine (22) und der berechneten Leistungsabgabe der Elektromaschine (22) das Soll-Drehmoment (MW, MW2) langsam erhöht bzw. verringert wird.

13. Verfahren nach einem der Ansprüche 7 bis 12, **dadurch gekennzeichnet, dass** zur Ermittlung der Leistungsanforderungen des Bordnetzes (34) die Klemmenspannung und/oder der Ladezustand einer Batterie (26) des Kraftfahrzeugs gemessen und ggf. eine zur Aufladung der Batterie (26) geeignete Stromstärke berücksichtigt wird.

14. Verfahren nach einem der Ansprüche 7 bis 13, **dadurch gekennzeichnet, dass** zur Ermittlung der Leistungsanforderungen des Bordnetzes (34) der Einschaltzustand von Verbrauchern (28, 30, 32) des Bordnetzes (34) abgefragt wird und die Nennleistungen der eingeschalteten Verbraucher (28, 30, 32) addiert werden.

## Claims

1. Motor vehicle having a hybrid drive, comprising an internal combustion engine with an engine controller and comprising at least one rotational-speed-regulated electric machine which is coupled, during idling, to a driveshaft of the internal combustion engine, wherein the engine controller (48) controls or regulates the internal combustion engine (10) during idling as a function of power demands of an on-board power system (34) of the motor vehicle, and comprising devices (24, 38, 40, 44) for determining the power demands of the on-board power system (34) during idling and a pilot controller (52) for converting the determined power demands of the on-board power system (34) during idling into a desired or nominal torque (MW, MW1) of the internal combustion engine (10), wherein the power demands comprise the electrical power demanded for charging a battery of the motor vehicle and the electrical power simultaneously consumed by electrical consumers of the motor vehicle during idling.

2. Motor vehicle according to Claim 1, **characterized in that** the devices (24, 38, 40, 44) for determining the power demands of the on-board power system (34) during idling comprise devices (44) for measuring the terminal voltage and/or for determining the charge state of a battery (26) of the motor vehicle.

3. Motor vehicle according to Claim 1 or 2, **characterized in that** the devices (24, 38, 40, 44) for determining the power demands of the on-board power system (34) during idling comprise devices (38, 40) for determining activated consumers (28, 30, 32) and for adding the nominal power of the activated consumers (28, 30, 32).

4. Motor vehicle according to one of Claims 1 to 3, **characterized by** devices (46) for measuring the power output of the electric machine (22).

5. Motor vehicle according to Claim 4, **characterized by** a device (38) for comparing a power output of the electric machine (22) calculated from the power demands of the on-board power system (34) with the measured power output of the electric machine (22).

6. Motor vehicle according to Claim 5, **characterized by** a slow regulator (54) for possible adaptation of the desired or nominal torque (MW, MW2) of the internal combustion engine (10) corresponding to an output variable of the comparison device (38).

7. Method for idling regulation of a hybrid drive of a motor vehicle which comprises an internal combustion engine and at least one rotational-speed-regulated electric machine which is coupled, during idling, to a driveshaft of the internal combustion engine, in which method, during idling, a predefined idling rotational speed of the internal combustion engine is set or held by means of the electric machine, in which method the internal combustion engine is controlled or regulated during idling as a function of power demands of an on-board power system of the motor vehicle, and in which method a power output of the electric machine (22) which is required to meet the power demands of the on-board power system (34) is calculated, and the calculated power output is converted by means of a pilot controller (52) into a desired or nominal torque (MW, MW1) of the internal combustion engine (10), wherein the power demands comprise the electrical power demanded for charging a battery of the motor vehicle and the electrical power simultaneously consumed by electrical consumers of the motor vehicle during idling.

8. Method according to Claim 7, **characterized in that** the power output of the internal combustion engine (10) is adapted to a respective power demand of an on-board power system (34) of the motor vehicle.

9. Method according to Claim 7 or 8, **characterized in that** a nominal torque (MW, MW1) of the internal combustion engine (1) is determined as a function of the power demand of the on-board power system (34), and an injection quantity, an air quantity and/or an ignition angle of the internal combustion engine (10) are/is adapted corresponding to the determined nominal torque (MW, MW1).

10. Method according to one of Claims 7 to 9, **characterized in that** the pilot controller (52) is composed substantially of a characteristic map to be applied, which characteristic map takes into consideration the engine temperature and/or the rotational speed of the internal combustion engine (10) as further input variables (E).

11. Method according to one of Claims 7 to 10, **characterized in that** the power output of the electric machine (22) is measured and compared with the calculated power output.

12. Method according to Claim 11, **characterized in that**, in the event of a deviation of the measured power output of the electric machine (22) and the calculated power output of the electric machine (22), the nominal torque (MW, MW2) is slowly increased or decreased.

13. Method according to one of Claims 7 to 12, **characterized in that**, to determine the power demands of the on-board power system (34), the terminal voltage and/or the charge state of a battery (26) of the motor vehicle is measured, and if appropriate, a current intensity suitable for charging the battery (26) is taken into consideration.

14. Method according to one of Claims 7 to 13, **characterized in that**, to determine the power demands of the on-board power system (34), the activation state of consumers (28, 30, 32) of the on-board power system (34) is queried, and the nominal powers of the activated consumers (28, 30, 32) are added.

## Revendications

1. Véhicule automobile avec un entraînement hybride, comprenant un moteur à combustion interne avec une commande de moteur et au moins un moteur électrique à régulation de régime accouplé au ralenti à un arbre d'entraînement du moteur à combustion interne, la commande de moteur (48) commandant ou réglant au ralenti le moteur à combustion interne (10) en fonction des exigences de puissance d'un réseau de bord (34) du véhicule automobile, ainsi que des dispositifs (24, 38, 40, 44) pour détecter les exigences de puissance du réseau de bord (34) au ralenti et une commande pilote (52) pour convertir les exigences de puissance détectées du réseau de bord (34) au ralenti en un couple souhaité ou de consigne (MW, MW1) du moteur à combustion interne (10), les exigences de puissance comprenant la puissance électrique exigée pour charger une batterie du véhicule automobile et la puissance électrique simultanément consommée par les consommateurs électriques du véhicule automobile au ralenti.

2. Véhicule automobile selon la revendication 1, **caractérisé en ce que** les dispositifs (24, 38, 40, 44) pour déterminer les exigences de puissance du réseau de bord (34) au ralenti comprennent des dispositifs (44) pour mesurer la tension de serrage et/ou pour déterminer l'état de charge d'une batterie (26) du véhicule automobile.

3. Véhicule automobile selon la revendication 1 ou 2, **caractérisé en ce que** les dispositifs (24, 38, 40, 44) pour déterminer les exigences de puissance du réseau de bord (34) au ralenti comprennent des dispositifs (38, 40) pour déterminer des consommateurs de courant raccordés (28, 30, 32), ainsi que pour additionner la puissance nominale des consommateurs de courant raccordés (28, 30, 32).

4. Véhicule automobile selon l'une quelconque des revendications 1 à 3, **caractérisé par** des dispositifs (46) pour mesurer la puissance fournie par le moteur électrique (22).

5. Véhicule automobile selon la revendication 4, **caractérisé par** un dispositif (38) pour comparer une puissance fournie par le moteur électrique (22) calculée en fonction des exigences de puissance du réseau de bord (34) et la puissance fournie par le moteur électrique (22) mesurée.

6. Véhicule automobile selon la revendication 5, **caractérisé par** un régulateur lent (54) pour l'adaptation éventuelle du couple souhaité ou de consigne (MW, MW2) du moteur à combustion interne (10) en fonction d'une valeur de départ du dispositif de comparaison (38).

7. Procédé pour la régulation du ralenti d'un entraînement hybride d'un véhicule automobile, qui comprend un moteur à combustion interne et au moins un moteur électrique à régulation de régime accouplé au ralenti à un arbre d'entraînement du moteur à combustion interne, dans lequel, au ralenti, un régime de ralenti prédéfini du moteur à combustion interne est ajusté ou maintenu à l'aide du moteur électrique, dans lequel le moteur à combustion interne est commandé ou régulé au ralenti en fonction d'exigences de puissance d'un réseau de bord du véhicule automobile, et dans lequel une puissance fournie par le moteur électrique (22) nécessaire pour satisfaire aux exigences de puissance du réseau de bord (34) est calculée et la puissance fournie calculée est convertie par le biais d'une commande pilote (52) en un couple souhaité ou de consigne (MW, MW1) du moteur à combustion interne (10), les exigences de puissance comprenant la puissance électrique exigée pour charger une batterie du véhicule automobile et la puissance électrique simultanément consommée par les consommateurs électriques du véhicule automobile au ralenti.

8. Procédé selon la revendication 7, **caractérisé en ce que** la puissance fournie par le moteur à combustion interne (10) est adaptée à une exigence de puissance respective d'un réseau de bord (34) du véhicule automobile.

9. Procédé selon la revendication 7 ou 8, **caractérisé en ce que** l'on détermine en fonction de l'exigence de puissance du réseau de bord (34) un couple de consigne (MW, MW1) du moteur à combustion interne (10), et une quantité d'injection, une quantité d'air et/ou un angle d'allumage du moteur à combustion interne (10) sont adaptés en fonction du couple de consigne déterminé (MW, MW1).

10. Procédé selon l'une quelconque des revendications 7 à 9, **caractérisé en ce que** la commande pilote (52) se compose essentiellement d'un champ caractéristique à appliquer, qui tient compte, en tant que valeur d'entrée supplémentaire (E), de la température du moteur et/ou du régime du moteur à combustion interne (10).

11. Procédé selon l'une quelconque des revendications 7 à 10, **caractérisé en ce que** la puissance fournie par le moteur électrique (22) est mesurée et est comparée avec la puissance fournie calculée.

12. Procédé selon la revendication 11, **caractérisé en ce que** dans le cas d'un écart entre la puissance fournie mesurée du moteur électrique (22) et la puissance fournie calculée du moteur électrique (22), le couple de consigne (MW, MW2) est lentement augmenté ou diminué.

13. Procédé selon l'une quelconque des revendications 7 à 12, **caractérisé en ce que** pour déterminer les exigences de puissance du réseau de bord (34), la tension de serrage et/ou l'état de charge d'une batterie (26) du véhicule automobile sont mesurés et éventuellement une intensité de courant appropriée pour charger la batterie (26) est prise en compte.

14. Procédé selon l'une quelconque des revendications 7 à 13, **caractérisé en ce que** pour déterminer les exigences de puissance du réseau de bord (34), l'état de raccordement de consommateurs de courant (28, 30, 32) du réseau de bord (34) est interrogé, et les puissances nominales des consommateurs de courant raccordés (28, 30, 32) sont ajoutées.
